# EUROPÄISCHE PATENTSCHRIFT

(11) **EP 2 116 550 B1**
(45) Veröffentlichungstag und Bekanntmachung des Hinweises auf die Patenterteilung: **14.07.2010**
(21) Anmeldenummer: 08008573.1
(22) Anmeldetag: 07.05.2008
(51) Int. Cl.: C07F 15/00

(54) **Verfahren zur Herstellung von Komplexen des Palladium(hydrogen) carbonats mit Aminliganden**
Method for producing complexes of palladium(hydrogen) carbonate with amino ligands
Procédé de fabrication de complexes de carbonate de palladium (hydrogène) avec des ligands amines

(43) Veröffentlichungstag der Anmeldung: 11.11.2009
(73) Patentinhaber: Umicore Galvanotechnik GmbH, 73525 Schwäbisch Gmünd (DE)
(72) Erfinder: Berger, Sascha, D-73527 Schwaebisch Gmuend (DE); Simon, Franz, D-73527 Schwaebisch Gmuend (DE); Oberst, Frank, D-73529 Schwaebisch Gmuend (DE); Manz, Uwe, D-73434 Aalen (DE); Bronder, Klaus, D-73527 Schwaebisch Gmuend (DE)
(74) Vertreter: Retzow, Stefan

(56) Entgegenhaltungen:
- WO-A-2007/029031

## Beschreibung

Die vorliegende Erfindung bezieht sich auf ein Verfahren zur Herstellung von Palladiumkomplexverbindungen. Insbesondere bezieht sich die vorliegende Erfindung auf ein Verfahren, bei dem ammoniakalische Komplexe des Palladium(hydrogen)carbonats in solche mit Aminen umgewandelt werden.

Herkömmliche Palladium-Nickel-Elektrolyte enthalten Ammoniak und Chlorid und stellen daher eine potentielle Gefährdung für die Gesundheit des Bedienpersonals dar und sind im Hinblick auf die Korrosion des Anlagenmaterials schädlich. Die herkömmlichen alkalisch-ammoniakalischen Verfahren nach dem Stand der Technik verwenden zur Abscheidung von Palladium oder einer Palladiumlegierung Tetraamminpalladium(II)chlorid [(NH₃)₄Pd]Cl₂ oder Palladium(II)diaminodinitrit [(NH₃)₂Pd](NO₂)₂ als Palladiumverbindung. Bei bereits existierenden chloridfreien Verfahren wird anstelle der Chloridverbindung Tetraamminpalladium(II)sulfat [(NH₃)₄Pd]SO₄ eingesetzt (Galvanotechnik 3 (2007), S. 677). Bei diesen Verfahren wird auf das korrosiv wirkende Chlorid verzichtet, das heißt der Angriff auf das Anlagenmaterial wird dadurch deutlich reduziert. Die Gesundheitsgefährdung für den Menschen durch entweichende Ammoniakdämpfe besteht jedoch weiterhin.

Bereits 1986 wurde die galvanische Abscheidung von Palladium-Nickel-Überzügen aus einem Elektrolyten auf Basis von Ethylendiamin von Raub und Walz beschrieben (Metalloberfläche 40 (1986) 5, S. 199-203, D. Walz und Ch. J. Raub, "Die galvanische Palladium-Nickel-Abscheidung aus ammoniakfreien Grundelektrolyten mit Ethylendiamin als Komplexbildner"). Darin wird erklärt, dass der Komplexbildner Ethylendiamin in idealer Weise in der Lage ist, die Abscheidepotentiale der beiden Metalle soweit zusammenzurücken, dass eine Legierungsabscheidung möglich ist. In diesem Elektrolyten kam als Palladiumkomplex [Pd(EDA)₂]X zum Einsatz. Als Anionen wurden Chlorid, Bromid, Sulfat und Sulfamat verwendet.

Ein Verfahren gemäß dem US-Patent (US 6743346) setzt auch Ethylendiamin als Komplexbildner ein und bringt das Palladium in Form der festen Verbindung aus Palladiumsulfat und Ethylendiamin ein. Das Salz enthält 31 bis 41 % Palladium (Molverhältnisse [SO₄]:[Pd] zwischen 0,9 und 1,15 und [Ethylendiamin]:[Pd] zwischen 0,8 und 1,2). Es ist nicht wasserlöslich, löst sich aber im Elektrolyten mit Überschuss an Ethylendiamin. Das Salz ermöglicht es zwar Palladium mit einer reduzierten Menge Ethylendiamin einzubringen, dennoch führt dies durch die Anreicherung von Sulfat zur Aufsalzung des Elektrolyten und somit zu einer Verkürzung der Badstandzeit.

Bei der Herstellung der Tetraamminpalladium(II)-halogenide oder des Tetraamminpalladium(II)-sulfats geht man aus von den entsprechenden einfachen Palladiumsalzen wie Palladium(II)chlorid bzw. -bromid oder -iodid oder Palladium(II)sulfat und setzt diese mit 4 Teilen Ammoniak um. Dabei entstehen die wasserlöslichen Komplexe [(NH₃)₄Pd]X₂ mit X = Cl, Br, I oder [(NH₃)₄Pd]SO₄. Das analoge Hydrogencarbonat [Pd(EDA)₂](HCO₃)₂ ist auf diesem Syntheseweg momentan nicht herstellbar, da ein entsprechendes Pd(II)-dihydrogencarbonat Pd(HCO₃)₂ nicht existiert bzw. kommerziell nicht erhältlich ist. Ebenso verhält es sich mit dem entsprechenden Carbonatsalz.

WO 2007/02803i A1 offenbart ein Verfahren zur Herstellung von Palladium-phosphin komplexe aus Tetraammin palladiumcarbonat

Aufgabe der vorliegenden Erfindung war demnach die Angabe eines Verfahrens zur Herstellung von Komplexen des Palladium(II)-Carbonats bzw. -hydrogencarbonats mit Aminliganden. Dieses sollte es in einem einfachen Prozess erlauben, die gewünschten Verbindungen unter ökologischen bzw. ökonomischen Gesichtspunkten vorteilhaft darzustellen.

Diese Aufgabe wird anspruchsgemäß gelöst.

Dadurch, dass man in einem Verfahren zur Herstellung von Palladiumkomplexverbindungen bestehend aus einem zweiwertigen Palladiumkation, einem oder mehreren Aminliganden und einem Carbonat- oder zwei Hydrogencarbonatanionen oder eine Mischung davon, das entsprechende Tetraamminpalladium(II)-dihydrogencarbonat bzw. das Tetraamminpalladium(II)-carbonat in Lösung mit dem Aminliganden unter Bedingungen umsetzt, bei dem der freigesetzte Ammoniak entfernt werden kann, gelangt man völlig überraschend, dafür aber nicht minder vorteilhaft zur Lösung der gestellten Aufgabe. Das Verfahren erlaubt es, die gewünschten Verbindungen in hohen Ausbeuten und extremer Reinheit darzustellen, so dass deren Einsatz für die galvanotechnische Abscheidung von Palladium mit den skizzierten Vorteilen erfolgen kann.

Prinzipiell ist der Fachmann frei in der Wahl der Aminliganden, die eingesetzt werden können. Er wird sich an den zur Verfügung stehenden und kommerziell oder präparativ leicht zu erhaltenden Liganden orientieren. Vorteilhaft ist dabei der Einsatz von einem oder mehreren zwei-, drei- oder vierzähnigen Liganden, z.B. auf Basis von Di-, Tri oder Tetraaminen. Besonders bevorzugt sind dabei solche, die 2 bis 11 C-Atome aufweisen. Ganz besonders bevorzugt ist der Einsatz von Liganden ausgewählt aus der Gruppe bestehend aus Ethylendiamin, Trimethylendiamin, Tetramethylendiamin, Pentamethylendiamin, Hexamethylendiamin, 1,2-Propylendiamin, Trimethylentetramin, Hexamethylentetramin. Äußerst bevorzugt ist Ethylendiamin (EDA) in diesem Zusammenhang.

Je nachdem, ob es sich bei dem Aminliganden um einen ein- oder mehrzähnigen Liganden handelt, werden die Aminliganden in unterschiedlichem stöchiometrischen Verhältnis zum Tetraminpalladium(II)-salz eingesetzt. Bevorzugt setzt man das Tetraamminpalladium(II)-salz im Molverhältnis 1:1,0 bis 4,5, vorzugsweise 1:1,0 bis 3,0, besonders bevorzugt 1:1,0 bis 2,5, mit dem Aminliganden um. Für zweizähnige Liganden, insbesonder Ethylendiamin beträgt das Verhältnis 1:1,0 bis 3,0, vorzugsweise 1:1,5 bis 2,5, besonders bevorzugt 1:2,0 bis 2,1.

Die Temperatur der Umsetzung kann vom Fachmann beliebig gewählt werden. Er orientiert sich an einer möglichst vollständigen Umsetzung bei möglichst gänzlicher Unterdrückung von Nebenreaktionen. Vorzugsweise wählt man die Temperatur während der Umsetzung zwischen 20°C und 100°C. Besonders bevorzugt liegt die Temperatur zwischen 40 und 90°C, ganz besonders bevorzugt zwischen 60 und 80°C.

Zur Vervollständigung der Entfernung des Ammoniaks aus dem betrachteten Komplex wählt der Fachmann die ihm hierzu zur Verfügung stehenden Maßnahmen. Vorteilhaft erscheint das Anlegen eines Vakuums während des Ligandenaustausches. Dadurch wird die Reaktion durch das andauernde Stören des Gleichgewichts in eine Richtung gezogen. Gleichfalls bewährt hat sich die Ausführungsform, bei der der gebildete Ammoniak zusätzlich durch Einleiten eines inerten Gases aus der Lösung ausgetrieben wird. Beide Maßnahmen helfen, den Ammoniak dem Gleichgewicht zu entziehen und lassen es zu, die anzuwendende Temperatur während der Umsetzung zu erniedrigen und trotzdem eine ausreichende Reaktionsgeschwindigkeit zu bewerkstelligen.

Die erfindungsgemäße Umsetzung kann in den für den Fachmann in Frage kommenden Lösungsmitteln durchgeführt werden. Dies sind bevorzugt solche, die sich in Bezug auf die Umsetzung inert verhalten, die betrachteten Stoffe jedoch noch ausreichend lösen. In Frage kommen beispielsweise wässrige Lösungen. Diese weisen neben wässerlöslichen organischen Lösungsmitteln zu größer 50 Gew.-% Wasser auf. Bevorzugt setzt man ausschließlich Wasser als Lösungsmittel ein. Der pH-Wert der Lösung wird so eingestellt, dass Ammoniak aus der Reaktionsmischung entfernt werden kann. Vorteilhafterweise bewegt sich pH-Wert im alkalischen Bereich. Bevorzugt ist ein Bereich von 7 - 14, weiter bevorzugt von 8 - 13 und besonders bevorzugt von 9 - 12. Äußerst bevorzugt, insbesondere für die Herstellung des entsprechenden Hydrogencarbonatsalzes, liegt der pH-Wert bei 9 - 11.

Die Reihenfolge der Zugabe der Reaktanden bleibt dem Fachmann überlassen. In einer bevorzugten Ausführungsform jedoch legt man zunächst den Aminliganden in der Lösung vor und gibt anschließend das Tetraamminpalladium(II)-salz hin.

In beispielhafter Weise kann die Herstellung einer Palladium-Ethylendiamin-Verbindungen durch Umsetzung von Tetraammin-palladium(II)-dihydrogencarbonat [Alfa Aesar Kat.-Nr. 45082] mit Ethylendiamin erfolgen. Wie im Beispiel beschrieben wird zur Umsetzung zunächst Ethylendiamin in Wasser vorgelegt und anschließend das Tetraamminpalladium(II)-dihydrogencarbonat portionsweise unter kräftigem Rühren zugeben. Es ist ebenso möglich, die Edukte in umgekehrter Reihenfolge zuzugeben. Dazu kann beispielsweise das Tetraamminpalladium(II)-dihydrogencarbonat in Wasser angeschlämmt und Ethylendiamin über einen Tropftrichter unter kräftigem Rühren zudosiert werden. Während der anschließenden Reaktionszeit von ca. 1 Stunde bei bis zu 100°C unter Rückfluss bildet sich das Produkt Bis(ethylendiamino)palladium(II)-dihydrogencarbonat.

Es findet dabei ein Ligandenaustausch von Ammoniak gegen Ethylendiamin gemäß folgender Reaktionsgleichung statt:

[(NH₃)₄Pd](HCO₃)₂ + 2 H₂N-CH₂-CH₂-NH₂ -> [(H₂N-CH₂-CH₂-NH₂)₂Pd](HCO₃)₂ + 4 NH₃

Der freigesetzte Ammoniak entweicht teilweise direkt aus der Lösung bzw. wird anschließend durch Einblasung eines Schleppgases, z.B. Luft oder Stickstoff, ausgetrieben. Zur Beschleunigung des Vorgangs kann zusätzlich ein Vakuum angelegt werden. Die erhaltene Lösung ist gelb und klar und hat einen pH-Wert von 9,5 bis 10.

Durch Eindampfen der Lösung bzw. durch Entfernen des Lösungsmittels ggf. im Vakuum kann der Komplex als reiner Feststoff erhalten werden. Dergestalt oder als Lösung ist er in entsprechenden elektrolytischen Bädern vorteilhaft einsetzbar, hilft er doch verhindern, dass eine Aufsalzung des Bades erfolgt, wenn verbrauchtes Palladium dem Bad in Form des (Hydrogen)Carbonats zugefügt wird.

Beispiel - Umsetzung Tetraamminpalladium(II)-dihydrogencarbonat mit Ethylendiamin durch Umkomplexierung mit Ethylendiamin (EDA)

### Ausstattung:

Dreihalskolben, Rührer, Heizer, Thermometer, Rückflusskühler, pH-Elektrode,

### Edukte:

| Komponente | Masse [g] | Stoffmenge [mol] | Molmasse [g/mol] | Dichte [g/cm³] | Volumen [ml] |
|---|---|---|---|---|---|
| Palladium | 100 * | 0,940 | 106,4 | - | - |
| Ethylendiamin (EDA) | 117 | 1,947 | 60,1 | 0,898 | 130 |

| | | | | | |
|---|---|---|---|---|---|
| * 277 g Tetraamminpalladium(II)-dihydrogencarbonat TAPHC (36% Pd) Molverhältnis Pd:EDA = 1:2,07 | | | | | |

### Qualität der verwendeten Chemikalien:

Tetraamminpalladium-(II)-dihydrogencarbonat (Produkt-Nr. 45082) von Alfa Aesar Ethylendiamin 99% zur Synthese (z.B. Merck Nr. 800947)

Ansatz für 1 Liter Endvolumen enthaltend 100 g Pd:
1. Vorlegen von 500 ml entionisiertem Wasser.
2. Ethylendiamin in Wasser zugeben (pH 11,5 bis 12).
3. Tetraamminpalladium(II)hydrogencarbonat portionsweise zugeben, Temperatur steigt auf über 50°C. Es bildet sich eine goldgelbe Lösung. Nach Zugabe der vollen Menge des Palladiumsalzes liegt der pH bei ca. 10,5.
4. Auf 80°C erhitzen und 1 h reagieren lassen. Beim Aufheizen schlägt die Farbe der Lösung von goldgelb nach grüngelb um. Es tritt eine leichte Trübung durch schwarze Partikel auf.
5. Die Mischung auf 50°C abkühlen lassen.
6. Filtration über Glasfaserfilter 6: wenig schwarzer Rückstand im Filter, hellgelbe Lösung, die stark nach Ammoniak richt.
7. Einleiten von Druckluft zur Abreicherung von Ammoniak.
8. Mit entionisiertem Wasser auf Endvolumen einstellen.

## Patentansprüche

1. Verfahren zur Herstellung von Palladiumkomplexverbindungen bestehend aus einem zweiwertigen Palladiumkation, einem oder mehreren Aminliganden und einem Carbonat- oder zwei Hydrogencarbonatanionen oder eine Mischung davon,
**dadurch gekennzeichnet, dass**
man das entsprechende Tetraamminpalladium(II)-dihydrogencarbonat bzw. das Tetraamminpalladium(II)-carbonat in Lösung mit dem Aminliganden unter Bedingungen umsetzt, bei denen der freigesetzte Ammoniak entfernt werden kann.

2. Verfahren nach Anspruch 1,
**dadurch gekennzeichnet, dass**
man als Aminliganden solche ausgewählt aus der Gruppe bestehend aus Ethylendiamin, Trimethylendiamin, Tetramethylendiamin, Pentamethylendiamin, Hexamethylendiamin, 1,2-Propylendiamin, Trimethylentetramin, Hexamethylentetramin einsetzt.

3. Verfahren nach einem oder mehreren der vorhergehenden Ansprüche,
**dadurch gekennzeichnet, dass**
man das Tetraamminpalladium(II)-salz im Molverhältnis 1:1,0 bis 4,5 mit dem Aminliganden umsetzt.

4. Verfahren nach einem oder mehreren der vorhergehenden Ansprüche,
**dadurch gekennzeichnet, dass**
man die Temperatur während der Umsetzung zwischen 20°C und 100°C einstellt.

5. Verfahren nach einem oder mehreren der vorhergehenden Ansprüche,
**dadurch gekennzeichnet, dass**
man unter Anlegen eines Vakuums arbeitet.

6. Verfahren nach einem oder mehreren der vorhergehenden Ansprüche,
**dadurch gekennzeichnet, dass**
man den gebildeten Ammoniak zusätzlich durch Einleiten eines inerten Gases aus der Lösung austreibt.

7. Verfahren nach einem oder mehreren der vorhergehenden Ansprüche,
**dadurch gekennzeichnet, dass**
man in einer wässrigen Lösung arbeitet.

8. Verfahren nach einem oder mehreren der vorhergehenden Ansprüche,
**dadurch gekennzeichnet, dass**
man zunächst den Aminliganden in der Lösung vorlegt und anschließend das Tetraamminpalladium(II)-salz hinzugibt.

## Claims

1. Process for preparing palladium complexes comprising a divalent palladium cation, one or more amine ligands and a carbonate anion or two hydrogencarbonate anions or a mixture thereof, **characterized in that** the corresponding tetraamminepalladium(II) dihydrogencarbonate or tetraamminepalladium(II) carbonate is reacted in solution with the amine ligand under conditions under which the ammonia liberated can be removed.

2. Process according to Claim 1, **characterized in that** amine ligands selected from the group consisting of ethylenediamine, trimethylenediamine, tetramethylenediamine, pentamethylenediamine, hexamethylenediamine, 1,2-propylenediamine, trimethylenetetramine, hexamethylenetetramine are used as amine ligands.

3. Process according to one or more of the preceding claims, **characterized in that** the tetraamminepalladium(II) salt is reacted in a molar ratio of 1:1.0-4.5 with the amine ligand.

4. Process according to one or more of the preceding claims, **characterized in that** the temperature during the reaction is set in the range from 20°C to 100°C.

5. Process according to one or more of the preceding claims, **characterized in that** the process is carried out with application of a vacuum.

6. Process according to one or more of the preceding claims, **characterized in that** the ammonia formed is additionally driven out of the solution by passing an inert gas into the solution.

7. Process according to one or more of the preceding claims, **characterized in that** the process is carried out in an aqueous solution.

8. Process according to one or more of the preceding claims, **characterized in that** the amine ligand is initially charged in the solution and the tetraamminepalladium(II) salt is subsequently added.

## Revendications

1. Procédé de fabrication de composés complexes de palladium constitués d'un cation palladium bivalent, d'un ou de plusieurs ligands amine et d'un anion carbonate ou de deux anions hydrogénocarbonate, ou un de leurs mélanges, **caractérisé en ce que** le dihydrogénocarbonate de tétraamine palladium (II) ou le carbonate de tétraamine palladium (II) correspondant est mis en réaction en solution avec le ligand amine dans des conditions qui permettent l'élimination de l'ammoniac libéré.

2. Procédé selon la revendication 1, **caractérisé en ce que** des ligands amine choisis dans le groupe constitué de l'éthylène diamine, la triméthylène diamine, la tétraméthylène diamine, la pentaméthylène diamine, l'hexaméthylène diamine, la 1,2-propylène diamine, la triméthylène tétraamine, l'hexaméthylène tétraamine sont utilisés.

3. Procédé selon une ou plusieurs des revendications précédentes, **caractérisé en ce que** le sel de tétraamine palladium (II) est mis en réaction en un rapport molaire de 1:1,0 à 4,5 avec le ligand amine.

4. Procédé selon une ou plusieurs des revendications précédentes, **caractérisé en ce que** la température est ajustée entre 20 °C et 100 °C pendant la réaction.

5. Procédé selon une ou plusieurs des revendications précédentes, **caractérisé en ce qu'**on travaille en appliquant un vide.

6. Procédé selon une ou plusieurs des revendications précédentes, **caractérisé en ce que** l'ammoniac formé est également éliminé de la solution par introduction d'un gaz inerte.

7. Procédé selon une ou plusieurs des revendications précédentes, **caractérisé en ce qu'**on travaille dans une solution aqueuse.

8. Procédé selon une ou plusieurs des revendications précédentes, **caractérisé en ce que** les ligands amine sont tout d'abord chargés initialement dans la solution, puis le sel de tétraamine palladium (II) est ajouté.
